# EUROPEAN PATENT SPECIFICATION

(11) **EP 2 337 755 B1**
(45) Date of publication and mention of the grant of the patent: **07.11.2018**
(21) Application number: 09813832.4
(22) Date of filing: 16.09.2009
(51) Int. Cl.: B65D 90/24, C08K 3/10, E02D 31/00, E21D 11/38, F16L 55/16

(54) **SYSTEM FOR MAKING WATERTIGHT A FABRIC**
SYSTEM ZUR ERZIELUNG VON WASSERUNDURCHLÄSSIGKEIT EINES GEWEBES
SYSTÈME PERMETTANT D'IMPERMÉABILISER UNE ÉTOFFE

(30) Priority: 18.09.2008 IT PD20080266
(43) Date of publication of application: 29.06.2011
(73) Proprietor: Marchesini, Franco, 31030 Saletto Di Piave TV (IT)
(72) Inventor: MARCHESINI, Franco, 31030 Saletto Di Piave (IT)
(86) International application number: PCT/IB2009/006916
(87) International publication number: WO 2010/032127

(56) References cited:
- EP-A1- 1 577 232
- US-A- 4 088 240
- US-A- 4 943 475
- US-A- 5 131 927
- US-A- 5 755 863
- US-A1- 2006 096 651
- US-B1- 6 439 508

## Description

### Background Art

### State of the art

At present, the state of the art and technology used in barrier effect systems, demonstrates the innovative nature of this system comprising the exclusive feature of a cavity surrounded by a fabric in which micro-sections are created in its mesh (warp&weft) using the fibres produced by the chemical reaction of a polymer that comes into contact with a fluid.

During transformation, one-way microvalves are formed, by way of these micro-sections, whose specific role is to limit the hydraulic expansion of the fluid which has collected and built up in the cavity because of the high barrier effect.

Furthermore, during the effect of the aforementioned transformation a hermetic seal is created of specific pressure obtained internally and mainly due to the chemical transformation of the polymer as well as accidental loads on the external surface. These special effects vary significantly according to the specific project for the required applications.

This innovative system, deemed to be the only one to act in this way, offers a high level of safety especially in applications that require quick intervention using simple methods with a high degree of operational success.

### Technical Description:

This is a technical solution that demonstrates the seal of any cavity with a rapid increase in volume restrained by a frame that limits and determines the load pressure acting on the external surfaces. The increase in volume which is created after expansion, is caused by the chemical reaction of the polymer that comes into contact with the fluid that is filtered through the mesh of the fabric woven with varying degrees of closeness that surrounds the seal and flow structure of the frame. This special procedure is activated by a chemical-physical process involving adhesion of the microcells with molecules marked by negative ions, attracted by positive ions that, with simple electromagnetism actions, form a reticulated fabric characterised by microvalves that block leakage of the fluid which has built up during the critical, incidental phase.

The supports for this activation belong to the accessories of the structure that covers and protects the cavity which is formed as a result of the increase in volume caused by chemical expansion of the polymer when its reacts with the fluid that has been filtered and flows from the fabric mesh. Said mesh, which is initially open, is closed by the microvalves created during the process and the entire surface that comes into contact with the fluid is quickly made completely watertight with a high barrier effect.

Furthermore, the possibility of activating a technological structure, covered by fabric, that can be used in particularly critical situations obviously in full compliance with the legislation in force and with a 100% level of safety should also be noted.

More specifically, the basic innovation of the system demonstrates the practical effects of the process thanks to its straightforward implementation given that all that is necessary is that the external surface comes into contact with a fluid and the chemical reaction takes place creating a block with varying degrees of compactness with a maximum watertight, barrier effect.

If we consider typical system use, the considerable savings in terms of product and energy should be noted which produce an excellent result as demanded by modern technology.

After a careful examination of systems currently in use, we have studied a system called: "system for making watertight a fabric covering a cavity which, by way of microvalves consisting of fibres produced during the chemical reaction of a polymer that comes into contact with a fluid which expands and builds up within the cavity, creates a high barrier effect" which guarantees specific technical requirements and, at the same time, complies with safety requirements and specifications dictated by the legislation in force.

Obviously, although the system is extremely simple, each practical application must be adequately developed using technical-productive support measures that are suitable for specific individual requirements.

The main aim of this system is to create a protective structure made of "warp&weft" mesh fabric woven with varying degrees of closeness of any type which, following a special physical-chemical procedure, causes an increase in volume which makes the fabric that covers it watertight and presents a highly efficient technological structure with a high barrier effect.

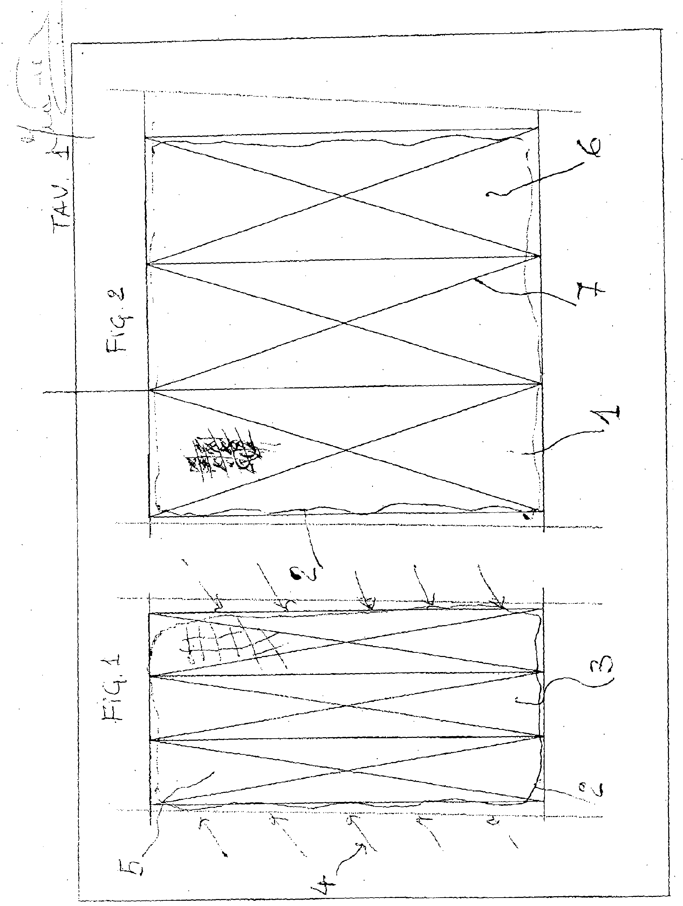

Additional characteristics and advantages of the system and its considerable innovative value can be seen by referring to and carefully analysing the figures shown below. Figs. 1 and 2 show a detailed description of a model for purely illustrative, non-limiting purposes.

Therefore, with reference to the drawings, the "system for making watertight a fabric covering a cavity which, by way of microvalves consisting of fibres produced during the chemical reaction of a polymer that comes into contact with a fluid which expands and builds up within the cavity, creates a high barrier effect" includes.
1. Receiving cavity.
2. Covering fabric.
3. Polymer reagent.
4. Contact fluid.
5. Passive stage: fluid build-up.
6. Active stage: chemical reaction of polymer and hydraulic expansion of fluid.
   Fabric warp&weft mesh; formation of microvalves and making microsections watertight.

### Practical embodiment:

The various parts comprising the system are sized according to the data for each project and adapted to meet specific applications. Said system thus conceived is therefore subject to numerous modifications and variations without thereby departing from the inventive concept.

Moreover, all the details may be suitably sized according to the specific project for each application required by modern technology.

In practice, the materials used and the sizes may be varied according to requirements. Note that, due to the structure of the device, what has been described above for illustrative purposes represents a schematic view that is sufficient for an expert to implement a project, but variations are possible.

Therefore, with reference to the preceding description and the accompanying drawings, the following claims are made.

## Claims

1. System for making watertight a fabric covering a cavity which, by way of microvalves consisting of fibres produced during the chemical reaction of a polymer that comes into contact with a fluid which expands and builds up within the cavity, creates a high barrier effect.

2. A system as claimed in claim 1, **characterized in that** the mesh (warp&weft) that form the fabric protect the cavity from the fluid that transpires within. This fluid comes into contact with a polymer opportunely placed in the cavity which undergoes a chemical transformation with hydraulic expansion, with the consequent formation of microsections of fibres which are interwoven to form one-way microvalves that guarantee a watertight seal on the sections with a barrier effect.

3. A system as claimed in claim 1, **characterized in that** the cavity in which the fluid builds up has a shape, size and capacity that can be adapted to the specific application design.

4. A system as claimed in claim 1, **characterized in that** the fabric covering the cavity has material, chemical composition, size, elasticity, strenght and density that can be adapted to the specific application design.

5. A system as claimed in claim 1, **characterized in that** the structure which reinforces the fabric covering the cavity comprises a grid with a shape, composition and profiles with mechanical strenght can be adapted to the specific application design.

6. A system as claimed in claim 1, **characterized in that** the polymer that is transformed as a result of the chemical reaction that causes hydraulic expansion of the fluid in the cavity has a specific chemical composition that depends on the fluid that generates the chemical reaction and it depends on the specific application design.

7. A system as claimed in claim 1, **characterized in that** the fluid that causes the chemical reaction with consequent hydraulic expansion in the cavity has chemical composition, nature, density, viscosity and colour that depends on the specific application design.

## Patentansprüche

1. System zur Abdichtung eines einen Hohlraum abdeckenden Gewebes, welches durch Mikroventile bestehend aus Fasern, die sich infolge der chemischen Reaktion eines mit einem Fluid in Kontakt kommenden sich ausdehnenden und um den Hohlraum herum vergrößernden Polymers bilden, eine Barrierewirkung erzeugt.

2. Ein System entsprechend dem Anspruch 1, **dadurch gekennzeichnet, dass** die Masche (Schuss&Kette), aus der sich das Gewebe zusammensetzt, den Hohlraum vor dem daraus ausschwitzenden Fluid schützt. Das Fluid kommt in Kontakt mit einem Polymer, das eigens hierzu im Hohlraum positioniert wurde und Gegenstand einer chemischem Veränderung mit einer hydraulischen Ausdehnung wird. Es bilden sich demzufolge Mikroabschnitte aus Fasern heraus, die ineinander verflochten sind, um Mikroventile mit nur einem Einlauf zu bilden, welche an den Abschnitten eine Abdichtung mit Barrierewirkung gewährleisten.

3. System entsprechend dem Anspruch 1, durch einen Hohlraum gekennzeichnet, in dem die Form, Größe und Kapazität des Fluids zunehmen. Es kann dem jeweiligen Anwendungsbereich angepasst werden.

4. System entsprechend dem Anspruch 1, **dadurch gekennzeichnet, dass** das den Hohlraum abdeckende Gewebe aus einem Material besteht und durch seine chemische Beschaffenheit, Größe, Elastizität und Dichte einem spezifischen Anwendungsbereich angepasst werden kann.

5. System entsprechend dem Anspruch 1, **dadurch gekennzeichnet, dass** die Struktur, welche das den Hohlraum abdeckende Gewebe verstärkt, ein Netz mit einer Form, Zusammensetzung und Profilen mit mechanischer Kraft umfasst und dem spezifischen Anwendungsbereich angepasst werden kann.

6. System entsprechend dem Anspruch 1, durch ein Polymer gekennzeichnet, das sich infolge einer chemischen Reaktion umwandelt, welche eine hydraulische Ausdehnung des Fluids im Hohlraum erzeugt. Das Polymer weist eine spezifische chemische Beschaffenheit auf, die vom Fluid abhängt, das diese chemische Reaktion auslöst; vom spezifischen Anwendungsbereich abhängig.

7. System entsprechend dem Anspruch 1, durch ein Fluid gekennzeichnet, das die chemische Reaktion mit darauffolgender hydraulischer Ausdehnung im Hohlraum erzeugt. Das Fluid weist eine chemische Beschaffenheit, Dichte, Viskosität und Farbe auf, die vom spezifischen Anwendungsbereich abhängen.

## Revendications

1. Système pour rendre étanche un tissu qui couvre une cavité qui, au moyen de micros clapets consistants en des fibres, produites durant la réaction chimique d'un polymère qui entre en contact avec un fluide qui s'étend et augmente à l'intérieur de la cavité, crée un effet barrière.

2. Un système comme dans la revendication 1, **caractérisé par le fait que** la maille (trame&chaîne) qui forme le tissu protège la cavité contre le fluide qui suinte de ce tissu. Ce fluide entre en contact avec un polymère opportunément positionné dans la cavité qui subit une transformation chimique avec une expansion hydraulique, avec la formation consécutive de micros sections de fibres qui sont croisées pour former des micros clapets à entrée unique qui garantissent le scellement étanche sur les sections avec des effets barrière.

3. Système comme indiqué dans la revendication 1 **caractérisé par** une cavité dans laquelle le fluide augmente en forme, dimension et capacité qui peut être adapté au domaine d'application spécifique.

4. Système comme indiqué dans la revendication 1 **caractérisé par le fait que** le tissu qui couvre la cavité est composé d'un matériau et présente une composition chimique, dimensions, élasticités et densités telles qu'il peut être adapté pour un domaine d'application spécifique.

5. Système comme indiqué dans la revendication 1 **caractérisé par le fait que** la structure de renforcement du tissu, qui couvre la cavité, comprend un réticule ayant une forme, une composition et des profils avec une force mécanique et qu'elle peut être adaptée au domaine d'application spécifique.

6. Système comme indiqué dans la revendication 1 **caractérisé par** un polymère, qui se transforme à la suite d'une réaction chimique qui provoque une expansion hydraulique du fluide à l'intérieur de la cavité, qui présente une composition chimique spécifique qui dépend du fluide qui génère cette réaction chimique et qui dépend du domaine d'application spécifique.

7. Un système comme dans la revendication 1, **caractérisé par** le fluide qui provoque la réaction chimique avec une expansion hydraulique conséquente à l'intérieur de la cavité. Le fluide présente une composition chimique, nature, densité, viscosité et couleur qui dépendent du domaine d'application spécifique.
